# EUROPEAN PATENT SPECIFICATION

(11) **EP 3 015 626 B1**
(45) Date of publication and mention of the grant of the patent: **25.10.2017**
(21) Application number: 14425137.8
(22) Date of filing: 29.10.2014
(51) Int. Cl.: E04H 9/02, B63B 35/44, E04B 1/346, E04H 9/14

(54) **Floating building work assembly**
Vorrichtung für ein treibendes Gebaüde
Dispositif de bâtiment flottant

(43) Date of publication of application: 04.05.2016
(73) Proprietor: Minnucci, Maurizio, 03011 Alatri (FR) (IT)
(72) Inventor: Minnucci, Maurizio, 03011 Alatri (FR) (IT)

(56) References cited:
- JP-A- H09 177 373
- JP-A- 2004 001 667

## Description

### Field of the Invention

This invention relates to the field of building constructions.

More particularly, this invention relates to a floating building work assembly.

### Background of the Invention

Traditional buildings are constrained through groundworks. This characteristic shows disadvantages as regards the behaviour of buildings under seismic stress and insolation.

Presently antiseismic technologies envisage resting of building constructions on mechanical shock absorbers. These ones, however, in any case transmit stresses, which in the most violent earthquakes still cause damages and cracks.

Likewise, insolation is a very important environmental factor in built rooms, normally a favourable one, as in usual civil habitation rooms, for visual comfort and for sanitary advantage, as weel as for calorific effect of the Sun in winter, but an unfavourable one for instance in working rooms, for the dazzling caused on worktops and for the direct calorific effect of the Sun, and in summer in habitation rooms. The feasible intervention presently is restricted to that of orienting the built room with respect to the North, which in being immovable on the ground turns out to be an optimum with respect to the path of the Sun on the celestial vault on the building site, to a suitable lightning engineering design of interiors, with possible paintings of walls and the use of curtains and protections, that keeps insolation in the course of the day into account.

More generally, environmental factors exist, the view from the inside not the least, the interaction with which is dependent on the orientation of a building, and that varies in time.

Therefore, two exigencies are presently felt in the field of building constructions.

A first exigency is that of constructions that are endowed with a substantially more effective defense against seismic effects in comparison with known antiseismic technology.

A second exigency is that of constructions that may be oriented, to take a sensible advantage in relation with said environmental factors, the interaction with which is dependent on the orientation of a building, and particularly to always realize the best exposure of a building to sunlight as a function of the environmental situation, for its implications for the purposes of illumination/shading and of heating/cooling, for energetic saving purposes too.

Therefore, it is the primary object of this invention to provide a building work assembly that satisfies said first exigency. Such an object is reached according to this invention by envisaging a building work assembly including a tank embedded in the ground and flooded with water, and a building, with the bottom closed and waterproofed, arranged to float inside the tank, so that the building stays mechanically isolated from the underlying and surrounding ground through the interposition of the liquid mass of the water. This mechanical release from the ground makes the building immune from telluric shocks, the most devastating too, and the primary object of this invention is so reached.

A prototype is known in the state-of-the-art of a floating house built by GLATTHAAR FERTIGKELLER GmbH (Schramberg, Germany), a company specialized in the construction of prefabricated cellars.

However, such a prototype is merely a one-family house floating in a sheet of water in a rectangular excavation with coated walls, only aimed at demonstrating the waterproofing effectiveness of its own systems for the construction of basement floors. Such a prototype does not solve any technical problem connected with the objects of this invention. Indeed, it is immediate that the walls of the excavation are not endowed with any mechanical strength sufficient to contain strains or breaks thereof under the thrusts of the surrounding ground bank or under the action of seisms.

It is a further object of this invention to satisfy both said first exigency and said second exigency in combination.

To such an object, this invention envisages the applicability of propulsion means which, suitably arranged and actuated, allow a controlled horizontal rotation of the building, so as to arbitrarily orient it easily and fastly. For instance, in the case of a house, an inventive building may by continuously oriented during the day to follow the path of the Sun on the celestial vault, to tap the thermal energy thereof and so to obtain considerable savings on heating costs; on the contrary, the building may be oriented due North in summer to keep its interior cooler and contain cooling costs. However, the building could be oriented arbitrarily, for instance towards different panoramas, for purely scenographical purposes.

The idea of rotating buildings arose towards the end of years One thosusand eight hundred. The example is noteworthy of "Villa Girasole", built near Verona between 1931 and 1935 by ANGELO INVERNIZZI, railway engineer, a building able to follow the path of the Sun moving circularly by a system of rails, under the thrust of diesel motors. However, the project of "Villa Girasole" anyhow stays constrained to the ground and does not anticipate the inventive concepts.

Chinese Patent Application No. CN20092258602U of LIN JINTANG, having the title "ENERGY-SAVING AND EARTHQUAKE-PROOF MULTIFUNCTIONAL HOUSE CAPABLE OF FLOATING ON WATER, ROTATING AND BEING LIFTED", published on 15th December, 2010 at No. CN201670344, referred to as document D1 in this application, discloses a central symmetry house having a foundation inferiorly endowed with rafts realized with rubber ring inflatable elements 7, and turbines 6 arranged circumferentially at the bottom. A well 1 is dug in an area, the walls whereof are treated for waterproofing, then filled with water. Drainage channels allow the well to be unloaded of/reloaded with water. The house is arranged to float in the water with its symmetry axis constrained through pinning on a telescopic shaft 4 fixed to the bottom of the well, and around which the house may be rotated on a whole round angle under the thrust of turbines 6. The house may be lifted/lowered by increasing/decreasing the level of water in the well through the draining channels. The arrangement of solar cells on the roof of the house is disclosed in D1 too. An anti-seismism of the work so built is featured in D1 in that under a seism the only mechanical constraint of the house with the ground consists in telescopic shaft 4, which however is a weakness element, subject to easy rupturing under a heavy seismic wave, without transmitting this one to the house.

JP H09 177373 A of TADA ATSUSHI ("CONSTRUCTION METHOD FOR DAMPING OR ISOLATING SEISMIC FORCE OF GREAT EARTHQUAKE EXERTED ON BUILDING, BASED ON PRINCIPLES OF STABILITY OF VESSEL AND MOTION OF HULL"), published on 8^{th} July, 1997, discloses the teaching of applying ship construction science to solve the problem of providing a building construction capable of damping a seismic external force striking it. The solution is to provide an underground water tank made of reinforced concrete, installed within the ground where a house has to be built, and a house basement made up of a corrosion-proof vessel case of stainless steel arranged therein on the bottom, resting on a beam base endowed with a rubber cushion fixed thereto. After a house has been built on the vessel case basement, water is poured into the water tank making the house to float therein. If an uneven load arises on the house, a compensation mechanism operated by a computer pours water from the underground water tank into a balance water tank in the vessel case basement. If a seismic force strikes the ground, it is damped by the water mass and the compensation mechanism. The solution is aimed at building one- or two-floor houses, using wood as the building material. The floating building work assembly of JP H09 177373 A discloses, in terms of claim 1, in combination:
- a tank arranged in the ground, including side walls and a bottom, containing water up to a free surface;
- a closed-shell waterproof structure forming a floating ground, including a ground-floor upper subfloor and a bottom lower subfloor, and having its bottom and its side walls realized as a bilge interspace for the collection of seepage and condensation water; which closed-shell structure is floating in said water, and is suitable for forming a foundation for a building construction i.e. edifice i.e. building, this one being provided with building technical installations, including sanitary fixtures, supporting the building construction above said free surface by hydrostatic thrust in said water.
JP 2004 001667 A of MITSUBISHI HEAVY IND. LTD. ("MOORING DEVICE"), published on 8^{th} January, 2004, discloses a mooring i.e. anchoring device for use to mechanically couple a body floating in a recessed structure, formed in the ground, to the inner wall thereof. The device has the capability of changing the strength of the mooring, which may be embodied by a unit for controlling the strength of the anchoring based on the output of an external force sense unit. Normally, i.e. under non-earthquake conditions, the mooring device contacts the inner wall and fixes the floating body thereto, against wind action on the floating body, but if a seismic wave strikes it, release members may release the contact of the device, disengaging the floating body from the wall of the recessed structure.

Moreover, a building exposes a considerable surface to wind and, consequently, will tend to move also under the action of weak air currents. In order that the building of D1 does not go adrift under the action of wind, it is necessary that shaft 4 has a considerable mechanical strength, such that it inevitably will transmit seismic waves to the house. Moreover, at each rupture shaft 4 will have to be substituted. In D1 too no specific engineering of the containment walls cf the water sheet is considered. So, D1 too is not able to achieve the objects of this invention.

In order to solve the Technical problem related to kneeping the building in its position in the tank, it is envisaged by this invention that the tank or the building are endowed with damped bumpers respectively oriented towards the building or towards the lip of the tank.

Moreover prior art does not envisage the technical problem of the control of water level in the tank, necessary for achieving the objects of this invention. In order to provide such a control, this invention envisages a cistern o reserve tank, in hydraulic communication with the tank, or main tank, through bidirectional transfer pumping means.

It is envisaged that a continuous brim connects the inventive building to the lip of the tank. Moreover, such a brim makes room for installing solar panels therein.

Therefore, the solar panels installed on the brim turn out to be particularly advantageous because they will find themselves always well exposed to sunrays. On the contrary, the solar panels installed on the roof of D1 following the rotation of the building may come to find itself in not an optimum exposure.

The present invention is advantageous in all these situations where one wants to realize a construction absolutely immune to earth tremors and/or in case rotating and orientable at will. The typical application is that of small-medium (one-family) houses, but the inventive teachings may advantageously be applied in the realization of any type of building, such as for instance blocks; commercial and industrial sheds; gymnasia; religious buildings; schools; terraced houses, or various structures, such as aseismatic dry bridges; movable bridges; building structures for astronomic observatories; building structures for orientable concentrating mirrors.

The finding may be built in any place, on any ground and with any material, such as for instance wood, box iron, tiles, prefabricated panels, bricks, blocks, concrete.

The present invention offers a number of advantages as compared to the buildings realized with known techniques. Moreover, by virtue of floating, the building is totally immune to earth tremors, the most disastrous ones too, of both sussultory and undulatory nature. By virtue of orientability, realized with a simple, fast and cheap system, the finding allows, for instance in the case of a habitation, livability, room comfort and home quality of life levels to be reached, never reached before. Considerable savings for thermal conditioning are obtained by both continuously orienting the building towards the Sun in winter, or towards the shade in summer, by both utilizing the water in the tank as an enormous heat accumulator or disperser in support of the thermal building installation, again increasing the savings in winter and summer conditioning.

Moreover, the total absence of exposure to mechanical stresses of seisms eliminates aseismatic building costraints, allowing substantial savings in the building, the possibility of using any material in any zone and a greater design freedom.

An additional advantage of the finding is that of being able of lifting the building 'on demand', by simply increasing the quantity of water stored in the tank. This is an enormous advantage in those places at the risk of flooding, inundations or river overflowings.

Not the last the spectacular effect is to be considered during rotations, especially in an agglomerate, such as a residence, with various buildings in motion.

The finding offers excellent and unequalled livability and room comfort by virtue of the possibility of easily rotating and orienting itself, at any moment, even many times in a day, continuously (for instance to follow the Sun, or to follow the shade) and at a very reduced costs (i.e. a few Euro cents per rotation).

The possibility of orientation of the building involves enormous savings in the costs of thermal conditioning.

The technique used to obtain the floating is simple and easily applied; the costs tied to the maintenance of buoyancy are very reduced; any part of the building may be inspected and maintained, the coating of the underwater bottom too. The water necessary for filling the tank and keep the right level thereof may be the rainwater collected from the roof, without any other waste.

The costs for the realization of the finding may be compared to those of an analogous traditional building, the continuous orientation towards the Sun or towards the shade and the water mass utilized as a heat accumulator or disperser make it much more advantageous as years go by virtue of the considerable savings on energy costs.

And anyhow the advantages that derive therefrom, in terms of both aseismatic safety and home comfort and, more generally, of quality of life, are absolutely incomparable.

Therefore, it is the subject-matter of the present invention a building work assembly according to appended Claim 1.

Preferred embodiments are set forth in dependant claims.

### Disclosure Preferred Embodiments

The present invention is disclosed in the details in the following description only given as a matter of example, absolutely not of restriction, referring to the appended drawing, wherein:

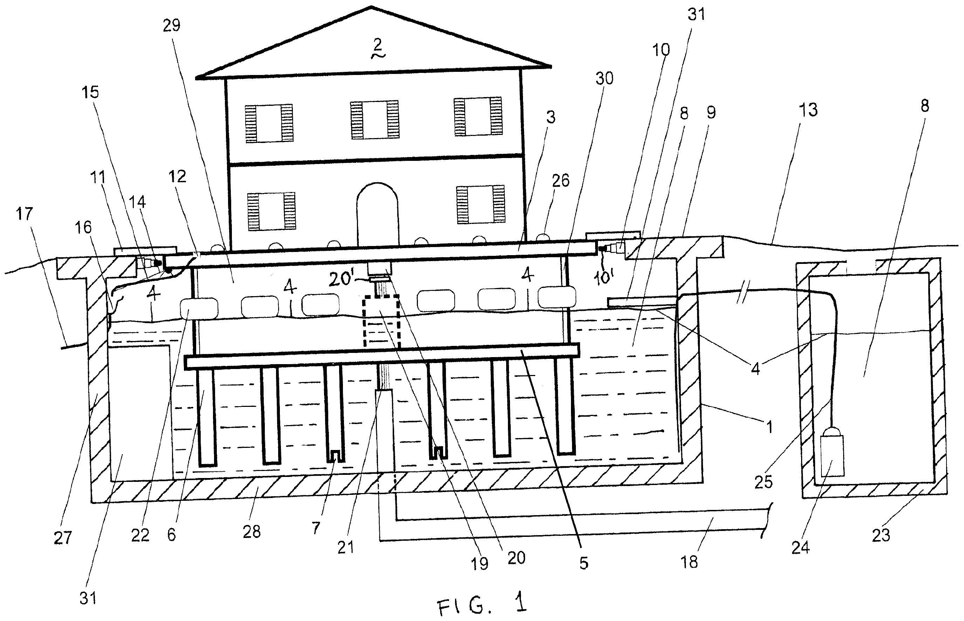

- FIGURE 1 is a schematic front elevation of the inventive building work assembly.

The present invention is a floating building work assembly including in combination:
*(a)* a tank 1 arranged in the ground, including side walls 27, a lip 9, containing a water mass 8 up to a free surface 4 and a bottom 28; advantageously tank 1 may be further endowed with bulkhead or septa 31 or other means for reducing the sloshing caused in water mass 8 by the shacking of tank 1 during seisms;
(b) a closed-shell waterproof structure forming a floating ground 29, including a ground-floor upper subfloor 3 and a bottom lower subfloor 5, and having its bottom and its side walls realized as a bilge interspace 30 for the collection of seepage and condensation water; which closed-shell structure 29 is floating in the water 8, and is suitable for forming a foundation for a building construction i.e. edifice i.e. building 2, this one being provided with building technical installations, including sanitary fixtures, supporting the building construction 2 above said free surface 4 by hydrostatic thrust in water 8. Floating ground 29 is provided with floating level control hydrostatic cistern means, and with floats forming antirolling control means, against the roll that is caused in the edifice consequently to wind gusts. Floats 22 advantageously may be arranged immediately above free surface 4 for opposing roll and may be formed of a continuous cushion, running along the entire wall of the edifice. The assembly is endowed with mechanical dampers 10 between ground-floor subfloor 3 and lip 9 of tank 1, made up of pneumatic or oleodynamic telescopic arms 10, fed by an air or oil feed pumping circuit, and anchored to lip 9 of tank 1, protruding perpendicularly to the lip itself towards the interior of the tank, forming decelerators, so avoiding the danger of collisions with the lip of tank 1, particularly in the event of a seism and of wind.

The floating ground is endowed with an omphalus and waterproof home service supply hose means 21 pass through tank 1, coming from an underground passage conduit 18, suitable for supplying feeds to said technical installations and remove drains from said sanitary fixtures passing through the omphalus. The omphalus a port 19 for the opening of the bottom of subfloor 5 and a water seal caisson 19', suitable for containing water entering from tank 1 through port 19, caisson 19' being raised, being upperly open, from bottom subfloor 5 about port 19 up to such a height as to always turn out to be higher than the water surface in tank 1, whereat the water arranges itself too entering thereinto by the principle of communicating vessels; so always leaving a head air interspace 19" over the water surface 4 in caisson 19'.

The inventive assembly, moreover, includes brim i.e. continuous perimetrical bridge modular means 11, overhanging from ground-floor subfloor 3 to lip 9 of tank 1, advantageously with a slope descending towards the lip of tank 1, anchored to ground-floor subfloor 3 and only resting on lip 9 of tank 1 or as an alternative anchored to lip 9 of tank 1 and only resting on ground-floor subfloor 3.

The assembly is equipped with a main control box including information storing, processing and transmission programmable means, in functional communication with accelerometer and anemometer means, and programmed for commanding the floating level and antirolling control means, i.e. hydrostatic cisterns and air chambers 22, and for commanding the immediate unloading of the feed circuit by simultaneously unloading all of telescopic arms 10 in the event of detection of a seism.

It is envisaged that the floating building work assembly further includes a secondary water reservoir 23 in hydraulic communication with tank 1 through bidirectional pumping means 24 and a water transfer piping 25.

Secondary reservoir 23 is useful in keeping a water supply to be transferred in case of need into tank 1 to keep building 2 at the desidered floating level.

That is, tank 1 and secondary reservoir 23 form an integrated system wherein tank 1 holds building 2 and the water necessary to assure the thrust for keeping the building at a desired level, and secondary reservoir 23 is to assure that there is always the quantity of water in tank 1 necessary for keeping the building at the desired level. The transfers are actuated by bidirectional pump 24 on demand according to the level of the building, a level that may rise or fall as a consequence, for instance, of summer evaporation or of rain water seepages. The removal of excess water in tank 1 always taked place to secondary reservoir 23, whilst the removal of excess water in the secondary reservoir takes place to the outside, that is the sewer system or irrigation offlets or the like through an overflow hole.

The control of the quantity of water in the two tanks and the water transfers may be committed to the pump control system and automatic actuation.

Tank 1 and secondary reservoir 23 may be realized in two different excavations or in one excavation only, provided completely isolated from one another, for instance by a reinforced concrete wall, and advantageouslt may be fed by rain water collected by the roof of building 2.

Tank 1 and secondary reservoir 23 may be endowed with a water filtering system to avoid problems consequent on stagnant water.

Floating ground 29 may comprise lighting and aeration openable transparent domes 26 on respective ports provided on ground-floor subfloor 3.

From bottom subfloor 5 a series may come down of downturned pillars 6, having a foot, forming means for ballasting said floating ground and keep the same lifted from the bottom of the tank in a situation of drained tank.

Downturned pillars 6 may be realized in reinforced concrete for a structural ballasting, or in hollow steel for a dynamic ballasting forming hydrostatic cisterns; and be endowed with a housing 7 in the foot, fit for housing jacks for operations for the lifting of the edifice.

Particularly it is envisaged that tank 1 and the floating ground 29 both have generally circular and concentric profiles; and that the inventive assembly further includes means for actuating rotations of said floating ground 29; and that omphalus 19 is arranged in correspondence with the rotation axis of floating ground 29; and that the assembly is provided with a rotary joint 20, 20' having a portion 20' thereof revolving about a rotation axis, arranged with said rotation axis on the axis of floating ground 29, above omphalus 19, suitable for jointing waterproof feed and drain hoses 21 to the building technical installations and sanitary drains passing through the omphalus, at the same time being fit for following the rotations of floating ground 29.

It is envisaged that the means for actuating horizontal rotations of floating ground 29 in water 8 in tank 1 include driving wheels or balls 10' of a friction material each one provided atop a respective one of telescopic decelerators 10, forming rotor means suitable for rotating parallelly to the plane whereon ground-floor subfloor 3 extends itself and in contact with the lip of ground-floor subfloor 3.

Brim modular means 11 may include, in a part below thereof for coming to resting on lip 9 of tank 1, roller means and inclined fanwise two-wing brushes.

Further ground-floor subfloor 3 may have a slope towards a concentric circular channel for collecting meteoric water 12 covered with a grid which it is provided with; which conveys the water into a meteoric water removal piping conveying it into syphon collection pits, wherefrom hoses 15 depart, supported by elastic supports 14 hooked aside the pits themselves, that convey the water into a gutter 16 that runs along the internal wall of said tank, from which gutter the water flows out of the tank by gravity through holes.

The central control box may be programmed to command the hydrostatic cisterns so as to make the floating ground with the edifice to sink up to lie down on the bottom of tank 1 resting on the downturned pillars when snow has been piled up on edifice 2 and on ground-floor subfloor 3 up to overcome a determined threshold weight.

Brim modular means 11 may be ballasted in correspondence with their anchored part.

Brim modular means 11 may include photovoltaic panels, suitable for directly transforming solar energy into electric energy.

Light emitting diodes may be installed in brim modular means 11, for high-impact spectacular effects, supplied by a battery pack located inside the module itself and recharged by the photovoltaic panel itself; the control box being programmed to command the switching-on and the switching-off of the light emitting diodes and the recharging of the batteries.

Brim modular means 11 may include thermal solar panels, suitable for transforming solar energy into thermal energy and therefore to produce warm water that may be utilized as both domestic water, and for accumulating heat raising the temperature of water in the tank; the control box being programmed to regulate the flow into the tank of the water heated by the modules based on a thermal demand determined in design phase.

Brim modular means 11 may include transparent panels.

Moreover, it is envisaged that the inventive floating builiding work assembly further includes a control structure i.e. turret, built on the terrain surrounding the floating building work, wherein a dependant control box and said accelereometer and anemometer means are arranged in functional communication therewith; the dependant control box being in wireless communication with the main control box and with all of the actuators of the assembly, and programmed to transmit the data received from said sensors to the main control box and to receive all of the actuator activation signals therefrom.

The control turret advantageously may further include a lightning conductor.

The floating ground, partially immersed, may be internally equipped for forming one or even more habitable floor thereinside, as in ships. It is envisaged that bottom 5 may have an imprint having dimensions substantially larger than that of the ground-floor subfloor to warrant suitable floating and stability of inclinations with respect to the vertical to the ground that wind could cause.

Should it turn out to be useful or advantageous, service gas and water may be stored in suitable vessels inside building 2 instead of being continuously fed from land. In that case it is foreseen that building 2 in the revolving case disclosed above may position itself in a specific position in which the openings of the vessels in the building may insert themselves in those of the pipings in the land for supply operations.

The present invention has been described and illustrated referring to specific embodiments thereof, but it is to be expressely understood that variations, additions and/or omissions may by brought, without so departing from the scope of protection thereof, which only remains defined by the appended claims.

## Claims

1. A floating building work assembly including in combination:
- a tank (1) arranged in the ground, including side walls (27), a lip (9), and a bottom (28), containing water (8) up to a free surface (4);
- a closed-shell waterproof structure forming a floating ground (29), including a ground-floor upper subfloor (3) and a bottom lower subfloor (5), and having its bottom and its side walls realized as a bilge interspace (30) for the collection of seepage and condensation water; which closed-shell structure (29) is floating in said water (8), and is suitable for forming a foundation for a building construction i.e. edifice i.e. building (2), this one being provided with building technical installations, including sanitary fixtures, supporting the building construction (2) above said free surface (4) by hydrostatic thrust in said water (8);
wherein said floating ground (29) is provided with floating level control hydrostatic cistern means, and with antirolling control float means (22);
and including mechanical damper means (10) between said ground-floor subfloor (3) and said lip (9) of said tank (1); wherein said mechanical damper means include pneumatic or oleodynamic telescopic arms (10), fed by an air or oil feed pumping circuit, and anchored to said lip (9) of said tank (1), protruding from the lip itself towards the interior of the tank, forming decelerators, to constantly keep said floating ground (29) centered in said tank (1) and decelerate horizontal translations of the edifice towards the lip, so avoiding the danger of collisions with said lip of said tank (1), particularly in the event of a seism;
wherein said floating ground is endowed with omphalus means (19, 19'), and waterproof home service supply hose means (21) pass through said tank (1), coming from an underground passage conduit (18), suitable for supplying feeds to said technical installations and remove drains from said sanitary fixtures passing through said omphalus means (19, 19'); said omphalus means (19, 19') including a port (19) for the opening of the bottom of said bottom subfloor (5) and water seal caisson means (19'), suitable for containing water entering from said tank (1) through said port (19), said caisson means (19') being raised, being upperly open, from said bottom subfloor (5) about said port (19) up to such a height as to always turn out to be higher than the water surface in said tank (1), whereat the water arranges itself too entering thereinto by the principle of communicating vessels; so always leaving a head air interspace (19") over the water surface in said caisson means (19');
and including brim i.e. continuous perimetrical bridge modular means (11), overhanging from said ground-floor subfloor (3) to said lip (9) of said tank (1), with a slope descending towards the lip of the tank, anchored to said ground-floor subfloor (3) and only resting on said lip (9) of said tank (1), or as an alternative anchored to said lip (9) of said tank (1) and only resting on said ground-floor subfloor (3);
and including a main control box including information storing, processing and transmission programmable means, in functional communication with accelerometer and anemometer means, and programmed for commanding said floating level and antirolling control means, and for commanding the immediate unloading of said feed circuit by simultaneously unloading all said telescopic arms (10) in the event of detection of a seism.

2. The floating building work assembly according to Claim 1, further including a water reservoir (23) in hydraulic communication with said tank (1) through bidirectional pumping means (24) and water transfer piping means (25).

3. The floating building work assembly according to Claim 1 wherein said tank (1) further includes bulkhead means (31) suitable for reducing the sloshing of the water mass during seisms.

4. The floating building work assembly according to Claim 1, wherein from said bottom subfloor (5) a series comes down of downturned pillars (6), having a foot, forming means for ballasting said floating ground and keep the same lifted from the bottom of said tank (1) in a situation of drained tank;
which downturned pillars (6) are realized in reinforced concrete for a structural ballasting, or in hollow steel for a dynamic ballasting forming hydrostatic cisterns; and are endowed with a housing (7) in said foot, fit for housing jacks for operations for the lifting of said edifice.

5. The floating building work assembly according to Claim 1, wherein said tank (1) and said floating ground (29) both have generally circular and concentric profiles;
further including means for actuating rotations of said floating ground (29)
and wherein said omphalus means (19) are arranged in correspondence with said rotation axis of said floating ground (29);
and including rotary joint means (20, 20') having a portion thereof revolving about a rotation axis, arranged with said rotation axis on the axis of said floating ground (29), above said omphalus means (19), suitable for jointing said waterproof feed and drain hose means (21) to said building technical installations and sanitary drains passing through said omphalus, being fit for following said rotations of said floating ground (29).

6. The floating building work assembly according to Claim 5, wherein
said means for actuating horizontal rotations of the floating ground (29) in said water (8) in said tank (1) include rotor means (10') each one provided atop a respective one of said telescopic decelerators (10) suitable for rotating parallelly to said plane whereon said ground-floor subfloor (3) extends itself and in contact with said lip of said ground-floor subfloor (3).

7. The floating building work assembly according to Claim 5, wherein
said brim modular means (11) include, in a part below thereof for coming to resting on said lip (9) of said tank (1), roller means and inclined fanwise two-wing brush means.

8. The floating building work assembly according to Claim 1, wherein further said ground-floor subfloor (3) has a slope towards a concentric circular channel for collecting meteoric water (12) covered with a grid which it is provided with; which conveys the water into a meteoric water removal piping conveying it into syphon collection pits, wherefrom hoses (15) depart, supported by elastic supports (14) hooked aside the pits themselves, that convey the water into a gutter (16) that runs along the internal wall of said tank, from which gutter the water flows out of the tank.

9. The floating building work assembly according to Claim 1, wherein said central control box is programmed to command said hydrostatic cisterns so as to make said floating ground with said building construction to sink up to lie down on said bottom of said tank (1) resting on said downturned pillars when snow has been piled up on said building construction (2) and said ground-floor subfloor (3) up to overcome a determined threshold weight.

10. The floating building work assembly according to Claim 1, wherein said brim modular means (11) are ballasted in correspondence with their anchored part.

11. The floating building work assembly according to Claim 1, wherein said brim modular means (11) include photovoltaic panels, suitable for transforming solar energy into electric energy.

12. The floating building work assembly according to Claim 1, wherein light emitting diodes are installed in said brim modular means (11), for high-impact spectacular effects, supplied by a battery pack located inside the module itself and recharged by the photovoltaic panel itself;
said control box being programmed to command the switching-on and the switching-off of said light emitting diodes and the recharging of said batteries.

13. The floating building work assembly according to Claim 1, wherein said brim modular means (11) include thermal solar panels, suitable for transforming solar energy into thermal energy and therefore to produce warm water that may be utilized as both domestic water, and for accumulating heat raising the temperature of water in said tank;
said control box being programmed to regulate the flow into the tank of the water heated by the modules based on a thermal demand determined in design phase.

14. The floating building work assembly according to Claim 1, wherein said brim modular means (11) include transparent panels.

15. The floating building work assembly according to Claim 1, further including a control structure i.e. turret, built on the terrain surrounding the floating building work, wherein a dependant control box and said accelereometer and anemometer means are arranged in functional communication therewith; the dependant control box being in wireless communication with said main control box and with all of the actuators of the assembly, and programmed to transmit the data received from said sensors to the main control box and to receive all of the actuator activation signals therefrom.

## Patentansprüche

1. Vorrichtung für ein treibendes Gebäude umfassend in Kombination:
- ein bodenmontiertes Becken (1) mit Seitenwänden (27), einem Rand (9) und einem Boden (28), der Wasser (8) zu einem freien Stapel (4) enthält;
- eine wasserdichte, geschlossene Schalenstruktur (29), die eine schwebende Ebene (5) bildet, die ein oberes Stockwerk, das ein Erdgeschoss (3) bildet, und ein unteres Bodenfach mit einer Boden- und Seitenwandung aufweist gemacht als Infiltrations- und Kondenswassersammlungshohlraum (30); die geschlossene Schalenstruktur (29) schwimmt in dem Wasser (8), deren geschlossene Schalenstruktur ein Fundament für den Hochbau oder das Bauaufbauen (2) ist, mit technischen Gebäuden, einschließlich Sanitäranlagen, ausgestattet und unterstützt den Bauaufbau (2) auf dem freien Haar (4) durch den hydrostatischen Schub des Wassers (8);
wobei die schwebende Ebene (29) mit einer Einrichtung zur hydrostatischen Tanksteuerung des schwimmenden Niveaus versehen ist, und ist mit Mitteln für eine schwimmende Anti-Roll-Steuerung (22) versehen;
und umfasst mechanische Dämpfungsmittel (10) zwischen dem zwischen dem Boden im Erdgeschoss (3) und dem Rand (9)des Beckens;
wobei die mechanischen Dämpfungsmittel pneumatische oder hydraulische Teleskoparme (10) umfassen, die durch einen Luft- oder Ölpumpkreis betrieben werden, die an dem Rand des Beckens verankert sind, die von der Felge zur Innenseite des Tanks vorstehen, die einen Verzögerer bilden, um die schwebende Ebene (29) kontinuierlich in der Becken (1) zentriert zu halten und verzögert die horizontale Verschiebung des Gebäudes an den Rand, wodurch die Gefahr von Kollisionen mit dem Rand des Beckens (1) vermieden wird, besonders bei Erdbeben;
wobei die schwebende Ebene mit Mitteln versehen ist, die ein Onphalus (19, 19') bilden, und durch das Becken (1) flexible Mittel zur Einführung von wasserdichten Haushaltsgeräten (21) werden übergeben, aus einem unterirdischen Durchgang (18), die in der Lage sind, die Macht zu den technischen Anlagen zu tragen und die zum Entfernen von Entladungen aus den Sanitärsystemen geeignet sind, indem sie durch die Onphalusmittel (19, 19') hindurchgehen; wobei die Onphalusmittel (19, 19') ein Öffnungslicht (19) des Bodens der Ebene (5) aufweist und Bestandteil des wasserdichten Gehäuses (19'), geeignet für die Aufnahme von Wasser, das in das Becken eintritt, die durch die Öffnungslicht (19) angezogen wird, die wasserdichten Gehäuse (19') wobei das Gehäuse über dem obigen, dem erhöhten Boden um das Onphalus bis zu einer Höhe angehoben ist, so daß es immer höher ist als die Oberfläche des Wassers in das Becken (1), zu dem auch das Einlaufwasser für das Prinzip der kommunizierenden Gefäße ist; also immer einen oberen luftraum (19") über die freie wasseroberfläche verlassen in das wasserdichte Gehäuse (19');
und umfassend Modulare Mittel, die eine kontinuierliche oder dehnbare Umfangsbrücke (11) aufweisen, die von dem Erdgeschoss (3) zu der Kante des Beckens (1) vorsteht, mit einem abfallenden Hang zum Rand (9) des Beckens (1) und nur auf das Erdgeschoss (3) gestützt;
und mit einer Hauptsteuereinheit, die programmierbare Mittel zum Speichern, Verarbeiten und übertragen von Information enthält, mit einer Hauptsteuereinheit, die in funktionaler Kommunikation mit beschleunigungsometrischen und anemometrischen Mitteln steht, und programmiert ist, um die Schwimm- und Anti-Roll-Steuereinrichtung zu steuern, mit einer Hauptsteuereinheit, und so programmiert ist, dass sie die sofortige Entladung der Versorgungsschaltung befiehlt, Gleichzeitiges Herunterladen aller Teleskoparme bei Erdbebenerkennung.

2. Vorrichtung für ein treibendes Gebäude nach Anspruch 1, ferner mit einem Wasserreservoir (23) in hydraulischer Verbindung mit dem Becken (1) mittels Zweiwege-Pumpeinrichtung (24) und mittels einer Einrichtung zum Übertragen von Wasserrohr (25).

3. Vorrichtung für ein treibendes Gebäude nach Anspruch 1, bei der das Becken (1) ferner eine Schüttgasse (31) aufweist, die geeignet ist, die Wassermasse während der Erdbeben wieder einzuspannen.

4. Vorrichtung für ein treibendes Gebäude nach Anspruch 1, bei der von der schwebende Ebene (5) fällt eine Reihe von umlaufenden Säulen (6), die einen Fuß haben, die Mittel zum Ballastieren des Bodens sind und halten die gleichen aus dem Boden des Beckens in einer entwässerten Beckens Situation erhöht;
welche umlaufenden Säulen (6) aus Stahlbton für die strukturelle Ballastierung bestehen oder aus Hohlstahl für die dynamische Ballastierung bestehen und hydrostatische Tanks bilden; und die mit einer Ausnehmung (7) in dem Fuß versehen sind, die für die Aufnahme von Buchsen für Hebevorgänge des Gebäudes geeignet ist.

5. Vorrichtung für ein treibendes Gebäude nach Anspruch 1, wobei das Becken (1) und die Schwimmerebene (29) sowohl im allgemeinen kreisförmige als auch konzentrische Profile aufweisen;
die ferner Mittel zum Betätigen von Drehungen der schwimmenden Ebene (29) aufweist;
und wobei das Onphalusmittel (19) an der Drehachse der schwimmenden Ebene (29) angeordnet ist;
mit drehbaren Gelenkmitteln (20, 20') mit einem drehbaren Teil um eine Drehachse, wobei die Mittel mit der Drehachse auf der Achse der schwebenden Ebene (29) oberhalb des Onphalusmittel (19) angeordnet sind und welche Mittel zum Verbinden der Mittel geeignet sind die einen flexiblen Wassereinlass- und Drainageschlauch (21) für die Gebäudetechniksysteme bilden, und die sanitären Abfälle, die durch das Onphalusmittel hindurchgehen, geeignet sind, die Umdrehungen der schwimmenden Ebene (29) zu tragen.

6. Vorrichtung für ein treibendes Gebäude nach Anspruch 5, wobei
die Einrichtung zum Betätigen von horizontalen Drehungen der schwebenden Ebene (29) in dem Wasser (8) in das Becken (1) Rotormittel (10') aufweist, die jeweils in dem Kopf eines der Verzögerer-Teleskoparme vorgesehen sind, die geeignet sind, sich parallel zu der Ebene zu drehen, auf der sich das Erdgeschoss (3) erstreckt und in Kontakt mit diesem steht Rand des Erdgeschoss (3).

7. Vorrichtung für ein treibendes Gebäude nach Anspruch 5, wobei
die dehnbare Umfangsbrücke modularen Mittel (11), die als ein darunterliegender Teil gespannt sind, un die Kante (9) des Beckens (1) zu tragen, Rollmittel und Mittel zum Bürsten von zwei geneigten Lüfterflügeln umfassen.

8. Vorrichtung für ein treibendes Gebäude nach Anspruch 1, wobei
weiterhin hat das Erdgeschoss (3) einen Hang zu einem konzentrischen kreisförmigen Kanal des Sammelns von meteorischen Gewässern (12), die von einem Gitter bedeckt sind, von dem es vorgesehen ist; die die Gewässer in eine Drainageleitung von meteorischen Gewässern leitet, die sie in die Entwässerungsbrunnen mit Siphon transportieren, aus denen flexible Rohre (15) aus elastischen Stützen (14) fressen, die an den Brunnen befestigt sind, die das Wasser in eine Rinne (16) verlaufen, die entlang der Wand verläuft Innerhalb des Beckens, aus welcher Rinne die Wasser aus dem Becken fließen.

9. Vorrichtung für ein treibendes Gebäude nach Anspruch 1, wobei die Steuereinheit so programmiert ist, daß sie die hydrostatischen Tanks so steuert, daß sie die schwimmende Ebene mit der Gebäudekonstruktion versenkt, bis sie auf dem Boden des Beckens (1) sitzt und auf den umgekehrten Säulen ruht, wenn sich Schnee auf der Gebäudekonstruktion (2) und auf dem Erdgeschoss (3) angesammelt hat bis zu einem gewissen Schwellengewicht.

10. Vorrichtung für ein treibendes Gebäude nach Anspruch 1, wobei die dehnbare Umfangsbrücke modularen Mittel (11) sind an ihrem verankerten Abschnitt ballastiert.

11. Vorrichtung für ein treibendes Gebäude nach Anspruch 1, wobei die dehnbare Umfangsbrücke modularen Mittel (11) umfassen Photovoltaik-Platten, die geeignet sind, Sonnenenergie in elektrische Energie umzuwandeln.

12. Vorrichtung für ein treibendes Gebäude nach Anspruch 1, wobei in die dehnbare Umfangsbrücke modularen Mittel (11) Leuchtdioden sind für großflächige szenografische Effekte eingebaut, die von einem im Inneren des Moduls positionierten und im Photovoltaik-Panel selbst aufgeladenen Akkumulatorpack angetrieben werden;
wobei die Steuereinheit so programmiert ist, daß sie das Ein- und Ausschalten der lichtemittierenden Dioden steuert und die Batterien auflädt.

13. Vorrichtung für ein treibendes Gebäude nach Anspruch 1 wobei die dehnbare Umfangsbrücke modularen Mittel (11) umfassen Solarthermieplatten, die für die Umwandlung von Sonnenenergie in Wärmeenergie geeignet sind und somit Heißwasser erzeugen, die sowohl als Sanitärwasser als auch zur Akkumulierung von Wärme durch Erhöhung der Wassertemperatur in der Wanne verwendet werden können;
wobei die Steuereinheit so programmiert ist, dass sie den Einströmen in dem von den Modulen erwärmten Wassertank entsprechend einer thermischen Anforderung, die während der Entwurfsphase bestimmt wurde, regelt.

14. Vorrichtung für ein treibendes Gebäude nach Anspruch 1 wobei die dehnbare Umfangsbrücke modularen Mittel (11) umfassen transparente Paneele.

15. Vorrichtung für ein treibendes Gebäude nach Anspruch 1 ferner mit einer auf dem Boden um die schwimmenden Bauarbeiten aufgebauten Struktur oder Kontrollturm, in der eine abhängige Steuereinheit angeordnet ist und die beschleunigungs- und anemometrischen Mittel in funktionaler Kommunikation mit ihr verbunden sind; wobei die abhängige Steuereinheit in drahtloser Kommunikation mit der Hauptsteuereinheit und allen Stellgliedern der Vorrichtung steht und programmiert ist, um die von den Sensoren empfangenen Daten an die Haupteinheit zu übertragen und von allen Betätigungssignalen der Stellglieder zu empfangen.

## Revendications

1. Dispositif de bâtiment flottant comprenant en combinaison:
- une baignoire (1) disposée sur le sol, comprenant des parois latérales (27), un bord (9) et un fond (28) contenant de l'eau (8) à un cheveu libre (4);
- un plancher flottant (29) constitué d'un plancher supérieur du plancher supérieur (3) et d'un compartiment inférieur (5), et d'une paroi inférieure et des parois latérales constituées d'une cavité (30)) recueillir de l'eau contre l'infiltration et la condensation; (29) est flottant dans ladite eau (8) et est adapté à la construction de bâtiments ou à la construction ou à la construction (2), qui est équipé d'installations techniques de bâtiments, y compris des installations sanitaires, construction de bâtiment (2) au-dessus desdits cheveux libres (4) pour une poussée hydrostatique dans ladite eau (8);
- dans lequel ledit plan flottant (29) est pourvu de moyens pour la commande de réservoir hydrostatique de niveau flottant, et des moyens de contrôle antirouille (22);
- et comprenant des moyens d'amortissement mécanique (10) entre ledit compartiment de plancher (3) et ledit bord (9) de ladite cuve (1); dans lequel lesdits moyens d'amortissement mécanique comprennent des bras télescopiques pneumatiques ou hydrauliques (10) alimentés par une pompe à air ou un circuit d'huile d'alimentation et ancrés sur ladite jante (9) dudit réservoir (1) l'intérieur de la baignoire, qui constitue des décélérateurs, pour conserver constamment ledit plan flottant (29) enfermé dans ladite cuve (1) et décélérer le déplacement horizontal du bâtiment vers le bord, évitant ainsi le risque de collision avec ledit bord de ladite baignoire (1), en particulier en cas de tremblement de terre;
dans lequel ledit plan flottant est pourvu de moyens formant onphal (19, 19'), et à travers lesdits moyens de passage de la cuve (1) constituant un tuyau flexible pour introduire des appareils électroménagers étanches (21) qui proviennent d'un conduit souterrain passage (18), apte à alimenter lesdites installations techniques et à éliminer les décharges desdits systèmes sanitaires en passant à travers lesdits moyens formant onphal (19, 19'); lesdits moyens formant onphal (19, 19') en comprenant une ouverture (5) au fond dudit fond et des récipients d'étanchéité hydrauliques (19'), aptes à maintenir l'eau d'entrée de ladite cuve (1) à travers ladite ouverture (19), ledit corps constituant un moyen (19') plus élevé, étant ouvert vers le haut, depuis ledit plancher inférieur (5) autour de ladite ouverture (19) jusqu'à une hauteur de plus en plus élevée par rapport au bord de l'eau dans ladite cuve (1), auquel l'eau y pénètre pour le principe des navires communicants; laissant ainsi toujours un espace d'air supérieur (19") sur le bord libre de l'eau dans ledit moyen de récipient (19');
et comprenant des moyens modulaires constituant un pont périphérique continu ou bord (11) faisant saillie de ladite dalle de fond (3) vers ledit bord (9) de ladite cuve (1) avec une pente inclinée vers le bord de la baignoire, ancrée sur ledit (3) et ne s'appuyant que sur ledit bord (9) dudit réservoir (1) ou alternativement ancré sur ledit bord (9) dudit réservoir (1) et ne repose que sur ledit compartiment de plancher (3);
et comprenant une unité de commande principale comprenant des moyens programmables pour stocker, traiter et transmettre des informations, en communication fonctionnelle avec des moyens accélérométriques et anémométriques, et programmés pour commander lesdits moyens de commande flottants et anti-antirouille et pour commander la décharge immédiate d'informations ledit circuit d'alimentation en téléchargeant simultanément tous lesdits bras télescopiques (10) en cas de détection de tremblements de terre.

2. Dispositif de bâtiment flottant selon la Revendication 1, comprenant en outre un réservoir d'eau (23) en communication hydraulique avec ledit réservoir (1) au moyen de moyens de pompage bidirectionnels (24) et des moyens pour former un piège à eau (25).

3. Dispositif de bâtiment flottant selon la Revendication 1, dans lequel ledit réservoir (1) comprend en outre des moyens de balle (31) aptes à réduire les sprays de la masse d'eau pendant les tremblements de terre.

4. Dispositif de bâtiment flottant selon la Revendication 1, dans lequel une série de piliers inversés (6) avec un pied sont prévues à partir dudit plancher inférieur (5), qui sont des moyens pour incliner ledit plan et maintenir le même montant du fond de ladite cuve (1) dans un état de bain évacué;
dont les piliers inversés (6) sont en béton armé pour le ballast structurel, ou en acier creux pour un ballast dynamique formant des réservoirs hydrostatiques; et sont pourvus d'un évidement (7) dans ledit pied pour des vérins de boîtier pour des opérations de levage dudit bâtiment.

5. Dispositif de bâtiment flottant selon la Revendication 1, dans lequel ledit réservoir (1) et ledit plan flottant (29) ont des profils généralement circulaires et concentriques;
comprenant en outre des moyens pour actionner des rotations dudit plan flottant (29);
et dans lequel lesdits moyens constitutifs d'onphalus (129) sont agencés en correspondance avec ledit axe de rotation dudit plan flottant (29);
et comprenant des moyens d'assemblage rotatif (20, 20') avec une partie rotative autour d'un axe de rotation agencé avec ledit axe coulissant sur l'axe dudit plan flottant (29) au-dessus dudit moyen formant constituant onphalus (19) pour connecter lesdits moyens flexibles de pose de tuyaux et les drains (21) auxdits systèmes techniques de construction et aux décharges sanitaires traversant ladite coque, aptes à supporter lesdites rotations dudit plan flottant (29).

6. Dispositif de bâtiment flottant selon la Revendication 5, dans lequel lesdits moyens pour faire fonctionner des rotations horizontales du plan flottant (29) dans ladite eau (8) dans ladite cuve (1) comprennent des moyens de rotor (10') prévus chacun à la tête d'un desdits bras d'accélérateur télescopique (10) tourner parallèlement audit plan sur lequel s'étend le plancher (3) et en contact avec ledit bord de ladite dalle de fond (3).

7. Dispositif de bâtiment flottant selon la Revendication 5, lesdits moyens modulaires de bord (11) comprennent, dans leur partie sous-jacente, pour supporter ledit bord (9) de ladite baignoire (1), des moyens de roulement et des moyens de brosse à éventail inclinés.

8. Dispositif de bâtiment flottant selon la Revendication 1, dans lequel ledit plancher de plancher (3) a en outre une pente vers un canal de collecte circulaire concentrique d'eau météorique (12) recouvert par une grille dont il est prévu; qui transporte les eaux dans un tuyau de drainage d'eaux météoriques en les transportant dans des puits septiques, à partir desquels des tuyaux flexibles (15) commencent, soutenus par des supports élastiques (14) attachés aux puits, qui transportent les eaux dans un puits une gouttière (16) s'étendant le long de la paroi interne de ladite baignoire, à partir de laquelle les eaux de gouttière s'écoulent hors de la baignoire.

9. Dispositif de bâtiment flottant selon la Revendication 1, dans lequel ladite unité de commande est programmée pour commander lesdits réservoirs hydrostatiques de manière à enfoncer ledit plan flottant avec ladite construction de bâtiment pour reposer sur ledit fond dudit réservoir (1) reposant sur lesdits piliers renversés lorsque de la neige s'est accumulée sur ladite construction de bâtiment 2) et ladite dalle de plancher (3) jusqu'à un certain poids de seuil.

10. Dispositif de bâtiment flottant selon la Revendication 1, dans lequel lesdits moyens modulaires de bord (11) sont ballastés au niveau de leur partie ancrée.

11. Dispositif de bâtiment flottant selon la Revendication 1, dans lequel lesdits moyens modulaires de bord (11) comprennent des panneaux photovoltaïques, adaptés pour transformer l'énergie solaire en énergie électrique.

12. Dispositif de bâtiment flottant selon la Revendication 1, dans lequel lesdites diodes électroluminescentes sont installées dans lesdites structures modulaires de bord (11) pour des effets panoramiques à fort impact, alimentés par un paquet de piles positionné dans le module et chargés par le panneau photovoltaïque lui-même;
ladite unité de commande étant programmée pour commander l'allumage et l'extinction desdites diodes électroluminescentes et la charge desdites batteries.

13. Dispositif de bâtiment flottant selon la Revendication 1, dans lequel lesdits moyens modulaires de bord (11) comprennent des panneaux solaires thermiques aptes à transformer l'énergie solaire en énergie thermique et produisent ainsi de l'eau chaude qui peut être utilisée à la fois comme eau sanitaire et pour accumuler de la chaleur en élevant la température de l'eau dans ladite baignoire;
ladite unité de commande étant programmée pour réguler le débit dans le réservoir d'eau chauffé par les modules en fonction des exigences thermiques déterminées lors de la phase de conception.

14. Dispositif de bâtiment flottant selon la Revendication 1, dans lequel lesdits moyens modulaires de bord (11) comprennent des panneaux transparents.

15. Dispositif de bâtiment flottant selon la Revendication 1, comprenant en outre une structure ou une tour de commande construite sur le sol autour du travail de construction flottant, dans lequel une unité de commande dépendante est agencée et lesdits moyens accélérométriques et anémométriques en communication fonctionnelle avec celle-ci; l'unité de commande dépendante étant en communication sans fil avec ladite unité de commande principale et tous les actionneurs du dispositif et étant programmée pour transmettre à l'unité principale les données reçues desdits capteurs et pour en recevoir tous les signaux d'actionnement des actionneurs.
